# EUROPEAN PATENT APPLICATION

(11) **EP 2 927 482 A1**
(43) Date of publication of application: **07.10.2015**
(21) Application number: 14163048.3
(22) Date of filing: 01.04.2014
(51) Int. Cl.: F03D 1/06, B32B 27/40

(54) **A wind turbine blade provided with an erosion shield**

(71) Applicant: LM WP Patent Holding A/S, 6000 Kolding (DK)
(72) Inventor: Schot, Leo, 6000 Kolding (DK); Schuring, Roel, 6000 Kolding (DK); Jacobsen, Torben Krogsdal, Lunderskov 6640 (DK); Haag, Michael Drachmann, 6710 Esbjerg (DK)
(74) Representative: Hussey, Paul Anthony

(57) **Abstract**

A wind turbine blade having a blade shell body made of a composite material comprising reinforcement fibres of a first fibre type embedded in a matrix material of a first matrix type is described. The blade comprises a tip end and a root end as well as a leading edge and a trailing edge. The blade comprises an erosion shield extending along an exterior surface of at least a portion of the blade shell body. The erosion shield comprises at least one inner layer of aramid reinforcement fibres embedded in a matrix material of a second matrix type, and at least one outer layer made of an UV resistant coating layer.

## Description

### Technical Field

The present invention relates to a wind turbine blade provided with an erosion shield, a method of manufacturing a blade provided with an erosion shield, and a method of retrofitting an erosion shield to the surface of a wind turbine blade.

### Background

Wind turbine blades are often made of a composite material reinforced with glass fibres, carbon fibres or a combination of glass and carbon fibres embedded in a polymer matrix, typically polyester, vinylester or epoxy. Aramid fibres have been suggested as fibre-reinforcement material, but compared to glass fibres and carbon fibres, aramid fibres have a poorer adhesion to resin, are more expensive, have a lower fibre strength, have a lower stiffness (than carbon fibres), have poorer compressive strength and are not suitable for post processing operations, such as machining or grinding. Therefore, aramid fibres have not commercially found use as reinforcement fibres in wind turbine blades.

Due to their operation in various locations, and across a wide variety of environmental conditions, wind turbine blades can experience cracking or failure of the blade surface due to continued impact of particles including rain, hail, dust, etc., on the blades, in particular on the leading edge of the blades. Erosion can also have a negative impact on the aerodynamics of a wind turbine blade, resulting in an associated loss in wind turbine power production. Such continued erosion and cracking or failure requires relatively complicated service operations to repair, and in some cases replace, the affected blades. These service operations can increase the operating cost of the wind turbines in question considerably.

To alleviate this problem, wind turbine blades are sometimes provided with erosion protection systems to prevent such cracking or failure. This may be in the form of a leading edge protective coating or tape provided on the blade surface, the coating or tape formed from a material adapted to present improved resistance to environmental erosion compared to the relatively hard and brittle material normally used in the construction of the wind turbine components, e.g. fibre-based composite material used in the manufacture of a wind turbine blade body, and/or an epoxy or polyester-based gelcoat used to coat such a wind turbine blade body. An example of a known erosion shield for a wind turbine blade can be seen in EP 2153065.

While such systems provide an increased time-between-service when compared to wind turbine blades without any erosion protection, eventual failure of the erosion protection will require a similar service operation for repair or replacement. As a result, there is a continued need to improve the durability of erosion shields on wind turbine blades to increase the time between failures of the erosion shields.

### Disclosure of the Invention

Accordingly, it is an object of the invention to provide a wind turbine blade having an erosion shield with increased operational lifetime.

According to a first aspect, the invention provides a wind turbine blade having a blade shell body made of a composite material comprising reinforcement fibres of a first fibre type embedded in a matrix material of a first matrix type, wherein the blade comprises a tip end and a root end as well as a leading edge and a trailing edge, wherein the blade comprises an erosion shield extending along an exterior surface of at least a portion of the blade shell body, wherein the erosion shield comprises:
- at least one inner layer of aramid reinforcement fibres embedded in a matrix material of a second matrix type, and
- at least one outer layer made of an UV resistant coating layer.

Accordingly, the invention provides a wind turbine blade made from a conventional composite structure comprising e.g. glass fibres or carbon fibres embedded in a polymer matrix of polyester, vinylester or epoxy, and which an erosion shield reinforced with aramid fibres, which has a higher impact strength than that of glass fibres and carbon fibres, protects. Thereby, the blade is protected by a strong erosion shield, which may prolong the lifetime of the wind turbine blade or at least prolong the periods between services or repairs of the blade. Further, the erosion shield is protected with a UV resistant coating layer which ensures that the strength of the aramid fibres is maintained under operation, and which may further extend the periods between services or repairs of the blade. The erosion shield may be provided as a relative thin layer on the exterior surface of the blade and along only a limited erosion critical part of the blade, whereby the additional cost of utilising aramid fibres may be minimised.

According to an advantageous embodiment, the second matrix type is a polyurethane polymer, e.g. an aliphatic or aromatic polyurethane, preferably an aromatic polyurethane. The polyurethane polymer may for instance comprise an aliphatic or aromatic isocyanate. This type of polymer provides a sufficient resin adhesion to the aramid fibres and may further provide a sufficient bond to the polymer matrix of the wind turbine blade. Further, the polyurethane polymer may be designed to a desired hardness. Thus, the at least one inner layer of the erosion shield may for instance be designed so as to absorb impact forces from particles on the erosion shield, and so as to reduce the possibility of interfacial failure between the erosion shield and wind turbine blade body. The particles may be any elements or detritus which may impact on a surface of the wind turbine blade during operation, e.g. water droplets in the form of rain or sea spray, dust particles, hail, etc. Preferably, the wind turbine blade body is substantially formed from a fibre-reinforced plastics composite material. Preferably, the cushioning material is selected to provide secure adhesion towards the wind turbine blade body and to the outer layer of erosion-resistant material.

Preferably, said inner layer is formed from a material having a Shore A hardness of between 25-90, preferably between 50-90.

According to a particular advantageous embodiment, the erosion shield further comprises a primer layer between the at least one inner layer and the at least one outer layer. This intermediate layer provides an improved adhesion between the at least one inner layer and the at least one outer layer.

The UV resistant coating layer could for instance be W4600, which is available from 3M.

The primer layer may be coloured in a different colour from the remainder of the erosion shield and the blade, which may help in identifying a starting erosion. The primer layer may for instance be coloured blue.

In an advantageous embodiment, the polyurethane material has a glass transition temperature Tg below a predefined operational temperature range of the wind turbine blade. Preferably, Tg is below +5 degrees Celsius.

Providing a polyurethane material having a Tg below the predicted operational temperature of the wind turbine blade means that the polyurethane material will be maintained in an amorphous, molten rubber-like state during turbine operation, and will provide the necessary cushioning effect, while ensuring secure adhesion with the external erosion shield layer and the underlying blade body.

As the inner layer of the erosion shield is not part of the structural components of the wind turbine blade, the Tg can be selected at this relatively low level, in contrast to the relatively high Tg required for wind turbine blade structural features, e.g. the Germanischer Lloyd requirement for a Tg onset of greater than 65 degrees Celsius for structural materials, i.e. the first inclination on a differential scanning calorimetry (DSC) curve used to analyse polymer composition.

Preferably, the Tg of the inner layer is between -20 degrees to +10 degrees Celsius, preferably between approximately -5 to +3 degrees Celsius.

Providing a polyurethane material having a Tg in these areas will ensure that the inner layer will be substantially formed from a relatively molten, rubber-like material, which will act to efficiently absorb any impact shock waves in the erosion shield before reaching the body of the wind turbine. In a particularly preferred aspect, the inner layer is selected such that the cushioning material is flexible to absorb the impact shock waves received from water at approximately 4 degrees Celsius, i.e. when the density of water is at a maximum, whereas the aramid reinforcement fibres provide the improved erosion resistance of the layer.

In a further aspect, Tg is between approximately -5 to -2 degrees Celsius. At temperatures below -10 degrees Celsius, the impacting particles will generally have reduced force, e.g. water will fall as snow. In such a case, as the impact shock waves will be reduced, the inner layer will generally not be required to absorb as much impact energy.

In a preferred embodiment, the erosion shield is arranged along at least a section of the leading edge of the blade. Thereby, the leading edge of the blade, which is particular prone to erosion, is further protected. The erosion shield may for instance extend across a bond interface between a pressure side shell part and a suction side shell part of the blade shell.

According to another preferred embodiment, the erosion shield extends along a longitudinal part of the blade, the longitudinal part extending along 1-50% of the length of the blade, advantageously extending along 1-35% of the blade. Thus, it is seen that the erosion shield extends only along a limited part of the blade, preferably along the leading edge of the blade. The longitudinal extent of said longitudinal part may even be only a few meters of the blade, e.g. 1-10 meters or 1-5 meters of the blade. According to a particular advantageous embodiment, the longitudinal part is arranged on an outer part of the blade near the tip.

In an advantageous embodiment, the erosion shield is provided as an over-lamination. This over-lamination may be carried out during manufacture of the wind turbine blade, or it may be carried out as a post-operation. Alternatively, the erosion shield may be applied as a pre-manufactured element, as a tape, or as a prepreg material, which may be applied to the outer surface of the blade. Such embodiments are particularly suitable for retrofitting of blades already installed on wind turbines.

As previously mentioned, the first fibre type is preferably chosen from the group of glass fibres, carbon fibres, or a combination of glass and carbon fibres. Further, the first matrix type is preferably chosen from the group of polyester, vinylester, or an epoxy.

Preferably, the at least inner layer has a thickness of 0.5-5 mm, more preferably 1-3 mm.

Preferably, the at least outer layer has a thickness of 0.1-2 mm, more preferably 0.3-1 mm.

According to another aspect, the invention provides a method of manufacturing a wind turbine blade, wherein the method comprises the steps of:
- providing a blade shell body made of a composite material comprising reinforcement fibres of a first fibre type embedded in a matrix material of a first matrix type, wherein the blade comprises a tip end and a root end as well as a leading edge and a trailing edge,
- applying an erosion shield extending along an exterior surface of at least a portion of the blade shell body by
- applying at least one inner layer of aramid reinforcement fibres embedded in a matrix material of a second matrix type, and
- applying at least one outer layer made of an UV resistant coating layer.

Accordingly, it is seen that the wind turbine blade is manufactured according to a method known per se and that the erosion shield is applied to the exterior of the blade shell body so as to provide an improved erosion resistance to a part of the blade.

Preferably, the erosion shield is applied along the leading edge of the blade and along an outer part of the blade. The erosion shield may be provided via an over-lamination. Alternatively, the erosion shield is provided as part of a prepreg or an adhesive tape to be applied to a wind turbine blade, wherein said layer of aramid reinforced polymer is provided as an inner layer with an outer layer made of an UV resistant coating.

In yet another aspect, the invention provides a method of retrofitting an erosion shield to a surface of a wind turbine blade having a blade shell body made of a composite material comprising reinforcement fibres of a first fibre type embedded in a matrix material of a first matrix type, wherein the blade comprises a tip end and a root end as well as a leading edge and a trailing edge, wherein the method comprises the steps of:
- applying an erosion shield extending along an exterior surface of at least a portion of the blade shell body by
- applying at least one inner layer of aramid reinforcement fibres embedded in a matrix material of a second matrix type, and
- applying at least one outer layer made of an UV resistant coating layer.

The manufacturing method or retrofitting method may comprise the step of providing a recessed channel on a portion of the surface of the wind turbine blade shell body, wherein said recessed channel is arranged to receive said at least one layer of cushioning material. The use of such a channel ensures that the aerodynamics of the finished blade will not be significantly affected by the use of the multi-layered erosion shield. It will be understood that said recessed channel may be formed during moulding of a wind turbine blade shell, or such a channel may be cut into or ground from the surface of a standard wind turbine blade shell.

The thickness of the layer may also be tapered towards the sides of the erosion shield, such that a gradual transition is achieved between the blade shell body and the erosion shield. In such an embodiment, an aerodynamic smooth surface may be achieved without forming a recess in the blade shell.

### Brief Description of the Drawings

The invention is explained in detail below with reference to an embodiment shown in the drawings, in which
Fig. 1 shows a wind turbine,
Fig. 2 is a schematic view of a wind turbine blade according to the invention,
Fig. 3 shows a schematic view of an airfoil profile of the blade of Fig. 2,
Fig. 4 shows a first embodiment of an erosion shield according to the invention,
Fig. 5 shows a first embodiment of an erosion shield according to the invention, and
Fig. 6 shows a first embodiment of an erosion shield according to the invention.

### Detailed Description of the Invention

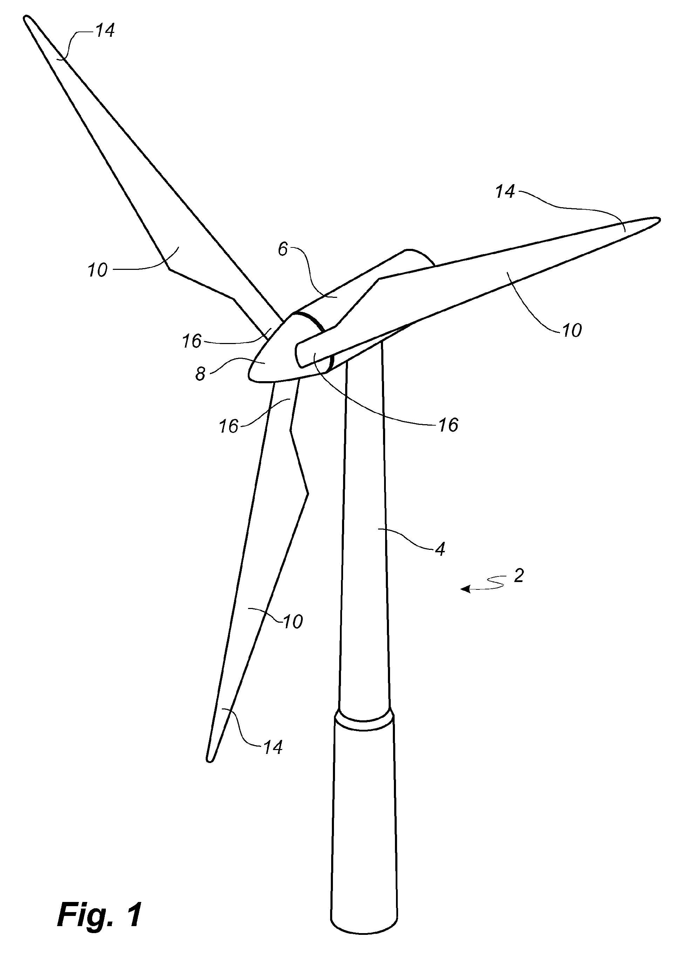

Fig. 1 illustrates a conventional modern upwind wind turbine according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 farthest from the hub 8. The rotor has a radius denoted R.

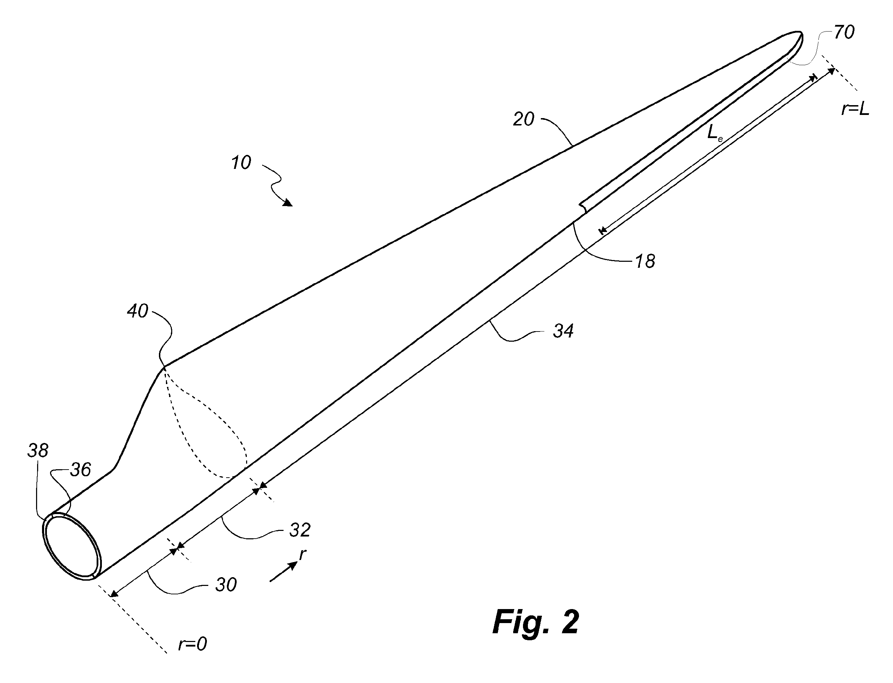

Fig. 2 shows a schematic view of a first embodiment of a wind turbine blade 10 according to the invention. The wind turbine blade 10 has the shape of a conventional wind turbine blade and comprises a root region 30 closest to the hub, a profiled or an airfoil region 34 farthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance *r* from the hub. The airfoil region 34 has an airfoil profile with a chord extending between the leading edge 18 and the trailing edge 20 of the blade 10. The width of the chord decreases with increasing distance *r* from the hub.

A shoulder 40 of the blade 10 is defined as the position, where the blade 10 has its largest chord length. The shoulder 40 is typically provided at the boundary between the transition region 32 and the airfoil region 34.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

The blade is typically made from a pressure side shell part 36 and a suction side shell part 38 that are glued to each other along bond lines at the leading edge 18 and the trailing edge of the blade 20.

The blade is provided with an erosion shield 70, which is arranged at the leading edge 18 of the blade 10 and extends along a longitudinal part of the blade having a length *Lₑ*. The erosion shield 70 may advantageously be arranged along e.g. the outer half or outer third of the blade only near the blade tip 14, i.e. *Lₑ*/*L* ≤ 0.5 or *Lₑ*/*L* ≤ 0.33. The erosion shield may even extend along a few metres only of the blade, e.g. 1-10 metres or 1-5 metres, for instance approximately 3 metres. Taking into account that wind turbine blades manufactured today typically are between 40 and 80 metres, this means that the ratio between *Lₑ* and *L* may even be 1-25%, or 1-20%, or 1-15%, or even 1-10%.

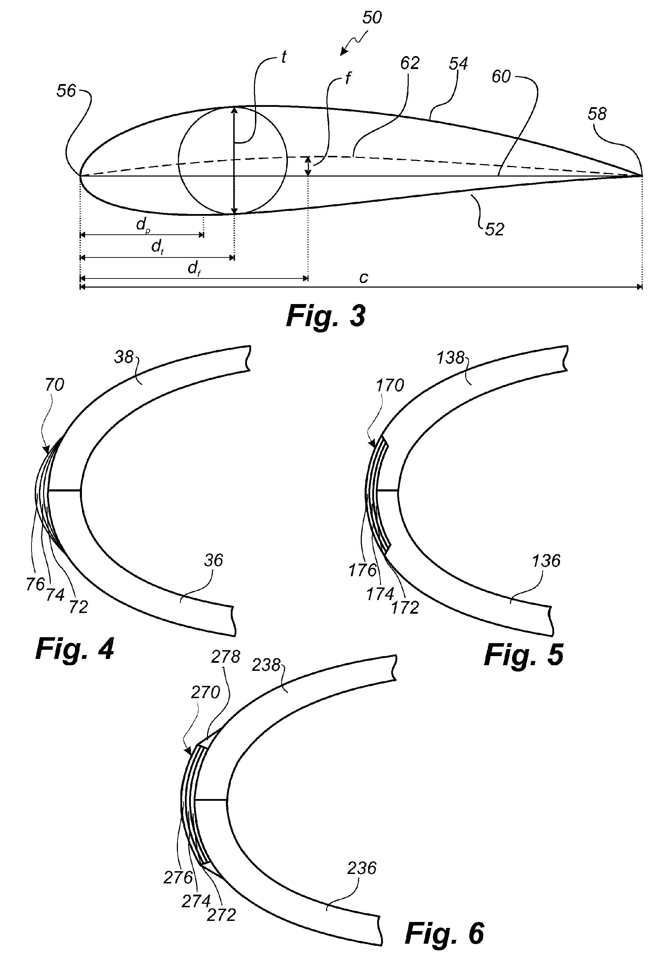

Fig. 3 shows a schematic view of an airfoil profile 50 of a typical blade of a wind turbine depicted with the various parameters which are typically used to define the geometrical shape of an airfoil. The airfoil profile 50 has a pressure side 52 and a suction side 54, which during use - i.e. during rotation of the rotor - normally face towards the windward (or upwind) side and the leeward (or downwind) side, respectively. The airfoil 50 has a chord 60 with a chord length c extending between a leading edge 56 and a trailing edge 58 of the blade. The airfoil 50 has a thickness t, which is defined as the distance between the pressure side 52 and the suction side 54. The thickness t of the airfoil varies along the chord 60. The deviation from a symmetrical profile is given by a camber line 62, which is a median line through the airfoil profile 50. The median line can be found by drawing inscribed circles from the leading edge 56 to the trailing edge 58. The median line follows the centres of these inscribed circles and the deviation or distance from the chord 60 is called the camber f. The asymmetry can also be defined by use of parameters called the upper camber and lower camber, which are defined as the distances from the chord 60 and the suction side 54 and pressure side 52, respectively.

Airfoil profiles are often characterised by the following parameters: the chord length c, the maximum camber f, the position df of the maximum camber f, the maximum airfoil thickness t, which is the largest diameter of the inscribed circles along the median camber line 62, the position dt of the maximum thickness t, and a nose radius (not shown). These parameters are typically defined as ratios to the chord length c.

Wind turbine blades are generally formed from fibre-reinforced plastics material, i.e. glass fibres and/or carbon fibres which are arranged in a mould and cured with a resin, typically polyester, vinylester or epoxy, to form a solid structure. Erosion shields in the form of a layer of erosion-resistant material are sometimes provided on wind turbine blades, usually at the leading edge 56, in order to prevent damage to the fibre-based composite material from the erosive qualities of rain, hail, dust particles, etc. continually striking the wind turbine blade surface during the lifetime of the blade.

Figs. 4-6 show various embodiments of blades with erosion shields according to the invention. The erosion shield is arranged to be provided on the leading edge of a wind turbine blade across the bond line between the pressure side shell part and the suction side shell part. The erosion shield according to the invention in general comprises an inner layer made of a polyurethane material reinforced with aramid fibres, an outer layer made of a UV resistant coating layer, and an intermediate primer layer.

Fig. 4 shows a first embodiment of an erosion shield 70 according to the invention. The erosion shield is arranged across the bond line of a pressure side shell part 36 and a suction side shell part 38 and comprises an inner layer 72 made of a polyurethane material reinforced with aramid fibres, an outer layer 76 made of a UV resistant coating layer, and an intermediate primer layer 74. In the shown embodiment, the thickness of the erosion shield 70 is tapered towards the sides of the erosion shield 70, such that a gradual transition is achieved between the blade shell body and the erosion shield 70.

Fig. 5 shows a second embodiment of an erosion shield 170 according to the invention. The erosion shield is arranged across the bond line of a pressure side shell part 136 and a suction side shell part 138 and comprises an inner layer 172 made of a polyurethane material reinforced with aramid fibres, an outer layer 176 made of a UV resistant coating layer, and an intermediate primer layer 174. In the shown embodiment, a recessed channel is formed on a portion of the surface of the wind turbine blade shell body, and the erosion shield 170 is arranged in the recessed channel. The use of such a channel ensures that the aerodynamics of the finished blade will not be significantly affected by the use of the multi-layered erosion shield, since the outer surface of the erosion shield may be substantially flush with the outer surface of the blade shell body. It will be understood that said recessed channel may be formed during moulding of a wind turbine blade shell, or such a channel may be cut into or ground from the surface of a standard wind turbine blade shell.

Fig. 6 shows a third embodiment of an erosion shield 270 according to the invention. The erosion shield is arranged across the bond line of a pressure side shell part 236 and a suction side shell part 238 and comprises an inner layer 272 made of a polyurethane material reinforced with aramid fibres, an outer layer 276 made of a UV resistant coating layer, and an intermediate primer layer 274. In the shown embodiment, the thicknesses of the three layers 272, 274, 276 are substantially uniform. A sealant 278 is arranged at the sides of the erosion shield in order to provide a smooth aerodynamic surface and to improve the adhesion the outer surface of the blade. The sealant 278 may be separately provided, or it may for instance be part of the UV resistant coating layer.

The erosion shields of Figs. 4-6 may be applied to the surface of the wind turbine blade during manufacturing of the wind turbine blade, or it may be retrofitted to the surface of an existing blade. The erosion shield may be applied as an over-lamination or alternatively as a pre-manufactured element or a tape.

The polyurethane material may be adapted to provide a cushioning effect for any impact shock waves which propagate through the erosion shield after the erosion shield is struck by a particle. Accordingly, this cushioning effect acts to absorb the energy from any such shock waves and to substantially dissipate the energy before said shock wave reaches the interface between erosion shield and the surface of the wind turbine blade. Further, by reinforcing the polyurethane material with aramid fibres, it is ensured that the layer is highly erosion resistant, which in turn means that the periods between service of the wind turbine blade may be extended, which again means that production down time may be minimised. Further, polyurethane has the advantage of being relatively cheap and of providing a good adhesion to the surface of the composite material of the blade shell body.

The polyurethane material may be formed from the reaction product of an alcohol/hydroxyl-group and isocyanate. The polyurethane material may advantageously have a Shore A hardness rating of between 25-90, preferably between 50-90.

Advantageously, the polyurethane material has a glass transition temperature Tg which is below a portion of the specified operational temperature range of the wind turbine blade. This means that the inner layer material will be provided in an amorphous rubber-like state for at least a section of the wind turbine blade operational range. This results in increased flexibility of the inner layer, with a corresponding increase in the ability of the inner layer to absorb impact shock waves.

The material of the inner layer may be selected such that Tg is between +20 to +10 degrees Celsius. Preferably, Tg is below +5 degrees Celsius, as this will ensure that the inner layer is in this relatively flexible state for a temperature of +4 degrees, i.e. when water density level is at a maximum. While wind industry standards require that composite materials have relatively high Tg levels, e.g. the Germanischer Lloyd requirement for a Tg onset of greater than 65 degrees Celsius for structural materials, the inner layer of the erosion shield of the invention is not a load bearing component, and is not subject to such requirements.

The depth of the inner layer may be selected based on the level of absorption of shockwave forces desired to achieve, and/or on the predicted operating conditions of the wind turbine blade. Preferably, the inner layer has a thickness of 0.5-5 mm, more preferably 1-3 mm. Preferably, the at least outer layer has a thickness of 0.1-2 mm, more preferably 0.3-1 mm.

It will be understood that the erosion shield may comprise a plurality of inner layers of erosion-resistant material, e.g. with polyurethane material having different shore A hardness, and/or a plurality of layers of UV resistant coating.

The invention is not limited to the embodiment described herein, and may be modified or adapted without departing from the scope of the present invention.

### List of reference numerals

| | |
|---|---|
| 2 | wind turbine |
| 4 | tower |
| 6 | nacelle |
| 8 | hub |
| 10 | blade |
| 14 | blade tip |
| 16 | blade root |
| 18 | leading edge |
| 20 | trailing edge |
| 30 | root region |
| 32 | transition region |
| 34 | airfoil region |
| 36 | pressure side shell part |
| 38 | suction side shell part |
| 40 | Shoulder |
| 50 | Airfoil profile |
| 52 | Pressure side |
| 54 | Suction side |
| 56 | Leading edge |
| 58 | Trailing edge |
| 60 | Chord |
| 62 | Camber line / median line |
| *c* | Chord length |
| *dₜ* | position of maximum thickness |
| *d_{f}* | position of maximum camber |
| *dₚ* | position of maximum pressure side camber |
| *f* | camber |
| *L* | Blade length |
| *Lₑ* | Length of longitudinal part / erosion shield |
| *r* | local radius, radial distance from blade root |
| *t* | thickness |

## Claims

**1.** A wind turbine blade having a blade shell body made of a composite material comprising reinforcement fibres of a first fibre type embedded in a matrix material of a first matrix type, wherein the blade comprises a tip end and a root end as well as a leading edge and a trailing edge, wherein the blade comprises an erosion shield extending along an exterior surface of at least a portion of the blade shell body, wherein the erosion shield comprises:
- at least one inner layer of aramid reinforcement fibres embedded in a matrix material of a second matrix type, and
- at least one outer layer made of an UV resistant coating layer.

**2.** A wind turbine blade according to claim 1, wherein the second matrix type is a polyurethane polymer.

**3.** A wind turbine blade according to claim 1 or 2, wherein the erosion shield further comprises a primer layer between the at least one inner layer and the at least one outer layer.

**4.** A wind turbine blade according to any of the preceding claims, wherein the erosion shield is arranged along at least a section of the leading edge of the blade.

**5.** A wind turbine blade according to any of the preceding claims, wherein the erosion shield extends along a longitudinal part of the blade, the longitudinal part extending along 1-50% of the length of the blade, advantageously extending along 1-35% of the blade.

**6.** A wind turbine blade according to claim 5, wherein the longitudinal part is arranged on an outer part of the blade near the tip.

**7.** A wind turbine blade according to any of the preceding claims, wherein the erosion shield is provided as an over-lamination.

**7.** A wind turbine blade according to any of the preceding claims, wherein the first fibre type is chosen from the group of glass fibres, carbon fibres, or a combination of glass and carbon fibres.

**8.** A wind turbine blade according to any of the preceding claims, wherein the first matrix type is chosen from the group of polyester, vinylester, or an epoxy.

**9.** A wind turbine blade according to any of the preceding claims, wherein the at least inner layer has a thickness of 0.5-5 mm, more preferably 1-3 mm.

**10.** A wind turbine blade according to any of the preceding claims, wherein the at least outer layer has a thickness of 0.1-2 mm, more preferably 0.3-1 mm.

**11.** A method of manufacturing a wind turbine blade, wherein the method comprises the steps of:
- providing a blade shell body made of a composite material comprising reinforcement fibres of a first fibre type embedded in a matrix material of a first matrix type, wherein the blade comprises a tip end and a root end as well as a leading edge and a trailing edge,
- applying an erosion shield extending along an exterior surface of at least a portion of the blade shell body by
- applying at least one inner layer of aramid reinforcement fibres embedded in a matrix material of a second matrix type, and
- applying at least one outer layer made of an UV resistant coating layer.

**12.** A method of retrofitting an erosion shield to a surface of a wind turbine blade having a blade shell body made of a composite material comprising reinforcement fibres of a first fibre type embedded in a matrix material of a first matrix type, wherein the blade comprises a tip end and a root end as well as a leading edge and a trailing edge, wherein the method comprises the steps of:
- applying an erosion shield extending along an exterior surface of at least a portion of the blade shell body by
- applying at least one inner layer of aramid reinforcement fibres embedded in a matrix material of a second matrix type, and
- applying at least one outer layer made of an UV resistant coating layer.
